# EUROPÄISCHE PATENTANMELDUNG

(11) **EP 0 783 058 A2**
(43) Veröffentlichungstag der Anmeldung: **09.07.1997**
(21) Anmeldenummer: 96120490.6
(22) Anmeldetag: 19.12.1996
(51) Int. Cl.: E03D 5/10, G01S 13/56, G01S 13/02

(54) **Steuervorrichtung für ein Urinal od.dgl.**

(30) Priorität: 04.01.1996 DE 19600112; 04.03.1996 DE 19608157; 11.09.1996 DE 19636963
(71) Anmelder: Steinel AG, 8840 Einsiedeln (CH)
(72) Erfinder: Steinel, Heinrich Wolfgang, D-86825 Bad Wörishofen (DE)
(74) Vertreter: Hiebsch, Gerhard F., Dipl.-Ing.

(57) **Zusammenfassung**

Die Erfindung betrifft eine Steuervorrichtung für ein Urinal od.dgl., mit einem zum Aktivieren eines Spülwasserzulaufs in ein Urinalbecken (10) elektrisch steuerbaren Ventil (28) und einer mit dem Ventil (28) verbundenen Sensoreinheit (32) zum berührungslosen Steuern des Ventils (28) als Reaktion auf eine Bewegung eines Benutzers frontseitig und relativ zu dem Urinalbecken (10), wobei die Sensoreinheit (32) zum Erfassen einer Bewegung auf der Basis von eine Schale (18) des Urinalbeckens (10) durchdringenden Mikrowellensignalen ausgebildet ist und so an einem rückwärtigen Bereich des Urinalbeckens (10) vorgesehen ist, daß ein Erfassungsbereich der Sensoreinheit (32) durch die Schale (18) des Urinalbeckens (10) hindurch auf den Benutzer gerichtet ist.

## Beschreibung

Die vorliegende Erfindung betrifft eine Steuervorrichtung nach dem Oberbegriff des Patentanspruches 1.

Herkömmliche, von einem Benutzer per Knopfdruck oder durch Betätigen eines Hebels zu spülende Urinale sind insbesondere beim Einsatz in öffentlichen Einrichtungen wie Bahnhöfen, Gaststätten od.dgl. im Hinblick auf Hygiene, Bedienungskomfort und mögliche mutwillige Zerstörungen nachteilig und werden in zunehmendem Maße durch berührungslos gesteuerte Vorrichtungen ersetzt.

Bei solchen bekannten Steuervorrichtungen -- die insoweit als gattungsbildend angesehen werden -- wird die Gegenwart eines Benutzers in der Regel mittels eines auf Infrarotbasis arbeitenden Sensors erfaßt, und auf der Basis der Sensorsignale wird dann, nachdem der Benutzer sich entfernt hat, der Spülvorgang ausgelöst. Derartige, mit einem Infrarot-Bewegungsdetektor arbeitende Vorrichtungen erfordern allerdings, daß eine optische Einheit -- üblicherweise eine einzelne Linse oder eine Linsenanordnung -- in geeigneter Höhe so auf einen sich nähernden bzw. sich entfernenden Benutzer gerichtet ist, daß eine Bewegung desselben zuverlässig detektiert werden kann.

Dies bringt aber, wie Erfahrungen gezeigt haben, nachteilige Konsequenzen insbesondere hinsichtlich Vandalismus mit sich: Nur all zu leicht kann die für eine Infrarot-Bewegungserkennung notwendige, von außen sichtbare Linse mittels eines Kaugummis od.dgl. deaktiviert, oder durch eine brennende Zigarette o.ä. völlig zerstört werden. Die Konsequenz wäre dann nicht nur ein bis zu einer Reparatur unbrauchbares Urinal, sondern zusätzlich ein beträchtlich erhöhter Reparatur- und Wartungsaufwand.

Ein weiteres Problem, das im Zusammenhang mit Urinalen, und insbesondere automatisch betätigbaren, auftritt, ist die Gefahr des Überlaufens bei Verstopfung des Wasserauslasses. Insbesondere hereingeworfene Gegenstände führen leicht zu einer Blockade des Abflusses.

Bei bekannten Urinaleinrichtungen wurde diesem zusätzlichen Problem dadurch begegnet, daß ein weiterer Sensor zum Erfassen einer potentiellen Überlaufsituation vorgesehen wurde, der dann im Überlauffall weiteren Zufluß von Spülwasser blockiert.

Wenn ein solcher Überlaufschutz in Verbindung mit einer automatischen Betätigung des Urinals eingerichtet werden soll, macht dies bei bekannten Vorrichtungen den Einsatz von mindestens zwei getrennten und mit jeweils separater Steuerelektronik zu versehender Sensoren notwendig, wodurch der technische Aufwand beträchtlich erhöht ist.

Aufgabe der vorliegenden Erfindung ist es daher, eine Steuervorrichtung für ein Urinal od.dgl. Sanitäreinrichtung nach dem Oberbegriff des Patentanspruches 1 zu schaffen, die einen weitgehend vor Vandalismus geschützten, störungsfreien Betrieb gewährleistet.

Die Aufgabe wird durch die Steuervorrichtung nach dem Patentanspruch 1 gelöst.

Vorteilhaft ermöglicht dabei das Vorsehen eines Bewegungssensors auf Mikrowellenbasis das vollständig sichtgeschützte Anbringen der Sensoreinheit hinter Keramikelementen od.dgl. des Urinals, wodurch der Sensor vor jedem -- zerstörerischen - äußeren Zugriff geschützt ist. Anderseits durchdringen die Mikrowellen den Keramikkörper des Urinals und erkennen trotzdem zuverlässig eine Bewegung eines Benutzers.

Als "Sensor" in diesem Zusammenhang soll insbesondere auch eine lediglich auf den passiven Empfang von Mikrowellen reagierende Erfassungseinrichtung verstanden werden (in diesem Fall würde das Mikrowellen-Sendesignal extern erzeugt und abgestrahlt werden); der Regelfall betrifft jedoch einen Sensor, der die abgestrahlten Signale selbst erzeugt.

Besonders geeignet wird zudem die erfindungsgemäße Sensoreinheit im rückwärtigen Bereich eines Urinals angebracht, da auf diese Weise auch handelsübliche, herkömmliche Urinalbecken auf einfache Weise mit dem -- bevorzugt flachen, kleinvolumigen -- Sensor nachgerüstet werden können.

Vorteilhafte Weiterbildungen der Erfindung sind in den Unteransprüchen beschrieben.

So ist besonders bevorzugt die Sensoreinheit hinter der eigentlichen Urinalbeckenschale auf der Höhe eines maximalen Flüssigkeitstandes in der Schale angeordnet, so daß ein Flüssigkeitspegel auf dem maximalen Füllstand den Erfassungsbereich des Sensors vollständig bedecken würde. Die sich aus diesem Betriebszustand ergebenen Sensorsignale sind besonders bevorzugt dahingehend auswertbar, daß jener Betriebszustand als Überlaufgefahr erkannt wird und dementsprechend eine weitere Zufuhr von Spülwasser durch das Ventil unterbunden wird. Bevorzugt könnte als minimaler Flüssigkeits-Füllpegel im erfindungsgemäßen Sinne auch ein Flüssigkeitsstand in der Schale angesehen werden, bei welchem mindestens die einer Spülung entsprechende Wassermenge noch Platz hat, ohne daß die Schale überlaufen würde.

Damit eine maximale Füllhöhe auch durch einen Betreiber vorgegeben werden kann, ist eine Verstelleinrichtung für die Sensoreinheit zum Verstellen in vertikaler Richtung gemäß einer bevorzugten Weiterbildung vorgesehen, mit welcher z.B. entsprechend eine maximale Füllhöhe vorwählbar wäre oder die Sensoreinheit auch davon unabhängig einstellbar ist.

Geeignet für eine Realisierung der erfindungsgemäßen Sensoreinheit ist zum einen die Verwendung eines nach dem Dopplerprinzip arbeitenden Radarsensors, der mit verhältnismäßig kleinen Ausgangsleistungen (und entsprechend niedrigem Energieverbrauch) innerhalb der fernmelderechtlich zulässigen Frequenzbänder eine zuverlässige und hinreichend genaue Erfassung ermöglicht.

Dabei erlauben die Frequenzen zwischen 1 und etwa 15 GHz, und insbesondere zwischen 2,4 und 2,8 bzw. zwischen 5,7 und 5,9 GHz eine problemlose Durchdringung auch dickerer Keramik- oder Plastikschichten, während Radarwellen dieser Wellenlängen von Wasser so stark gedämpft bzw. absorbiert werden, daß eine problemlose Realisierung auch der weiterbildungsgemäßen Überlaufsicherung möglich ist.

Damit ein zuverlässiger Betrieb auch einer Mehrzahl von mit der erfindungsgemäßen Steuervorrichtung ausgestatteter Urinale nebeneinander möglich ist, sollten jeweilige Erfassungsbereiche der Sensoreinheiten voneinander getrennt sein; dies ist durch technische Maßnahmen betreffend eine Sende- und/oder Empfangsfunktion der Sensoreinheit oder durch antennentechnische Maßnahmen möglich.

Alternativ und besonders geeignet für die Realisierung der erfindungsgemäßen Sensoreinheit ist der Einsatz eines auf Mikroimpulstechnik basierenden Radarsensors, auch als Breitband-Impulsradarsensor bezeichnet. Ein solcher zeittorgesteuerter Radarsensor basiert auf dem Erfassungsprinzip des Aussendens bevorzugt einer Mehrzahl spektral breitbandiger Impulse und des Erfassens dieser am Messobjekt reflektierten Impulse innerhalb eines vorbestimmten, zeitlich versetzten Zeittores. Aus der durch das Zeittor vorgegebenen Laufzeit der erfaßten Impulse läßt sich dann eine Entfernung des Objektes bzw. eine Reichweite bestimmen bzw. einstellen.

Eine solche Impulstechnik besitzt gegenüber der vorbeschriebenen Dopplertechnik als weitere Verbesserung insbesondere noch die Vorteile konstanter Reichweite unabhängig vom Material (also z.B. vom Keramik) vor dem Sensor, bedingt durch die reine Laufzeitmessung. Darüber hinaus besitzt ein solcher Sensor eine sehr geringe Abstrahlleistung, ist in der Herstellung preiswert und unempfindlich gegen beliebige Störungen außerhalb des durch das Zeittor vorgegebenen Erfassungsbereiches. Da zudem bevorzugt ein solcher Sensor extrem kurze Impulssignale (im ns-Bereich) mit einer demgegenüber langen (z.B. Faktor 1000) Periodendauer ausstrahlt, ist eine gegenseitige Beeinflussung einer Mehrzahl solcher Sensoren praktisch ausgeschlossen.

Eine Bewegungserfassung bei einem (Breitband-) Impuls-Radarsensor kann insbesondere dadurch erfolgen, daß eine Mehrzahl von Impulsen periodisch ausgesendet wird und --zeittorgesteuert -- Änderungen der reflektierten Impulse, insbesondere der empfangenen Impulsanzahl, erfaßt werden. Diese Änderungen entsprechen dann einer Bewegung des Objektes, an welchem die jeweiligen Impulse reflektiert wurden.

Besonders bevorzugt wird zur Verwendung mit einem der beschriebenen Sensoren eine einen flachen Aufbau ermöglichende Antenne gewählt, da auf diese Weise ein kompaktes, flaches Modul der Sensoreinheit mit Antenne herstellbar ist, welches eine einfache, flexible Montage und Nachrüstung gestattet. Zudem bietet es sich an, ein so hergestelltes Modul mit einem Kunstharz od.dgl. zu vergießen oder auf andere Weise wasser- und verschmutzungsgeschützt zu kapseln.

Während man die erfindungsgemäße Steuervorrichtung etwa in bereits vorhandene Versorgungsleitungen (z.B. für ein elektromechanisches Ventil) für die eigene Stromversorgung benutzen könnte, wäre alternativ auch ein netzunabhängiger Batteriebetrieb oder ein Betrieb über Solarmodule od.dgl. möglich, da die erfindungsgemäße, auf dem Mikrowellenprinzip basierende Sensoreinheit nur einen entsprechend geringen elektrischen Energieverbrauch aufweist.

Aus Obigem zeigt sich, daß vorteilhaft mit einer einzigen Sensoreinheit (und demgemäß auch mit einer vergleichsweise einfachen elektronischen Auswertung) verschiedene Steuer- und Überwachungsfunktionen, so etwa die Betätigung als auch eine Überwachung auf Überlaufen, möglich sind. Gemäß einer zusätzlichen Weiterbildung könnte zudem der Mikrowellensender (als Teil der erfindungsgemäßen Sensoreinheit) benutzt werden, um in einem Störungs- oder Alarmfall entsprechende zusätzliche Sendesignale auszustrahlen, die dann geeignete Gegenmaßnahmen veranlassen oder einleiten können.

Alternativ ist es gemäß einer erfindungsgemäßen Weiterbildung möglich, die Steuervorrichtung mit einem Funkmodul zu koppeln, welches dann in geeigneter Weise - - bevorzugt drahtlos - - Informationen betreffend einen jeweiligen Betriebszustand der erfindungsgemäßen Steuervorrichtung senden könnte, die dann von einer externen, entsprechend eingerichteten Empfangs- und Auswerteinheit empfangen und ggf. weiterverarbeitet werden können. Eine solche Anordnung eignet sich insbesondere auch zur Feststellung von Stör- oder Alarmzuständen, wobei auf diese Weise bevorzugt eine Mehrzahl von erfindungsgemäßen Urinalsteuerungen überwacht werden könnte.

Gemäß einer weiteren, erfindungsgemäßen Weiterbildung ist für die Steuervorrichtung eine Dekodiereinheit vorgesehen (bzw. in diese integriert), mit welcher besondere, für eine menschliche Bewegung untypische Bewegungen erfaßt und geeignet als Befehle für einen Lern- bzw. Programmiermodus, also zur Änderung von Betriebsparametern der Urinalsteuervorrichtung, benutzt werden können. Konkret bietet es sich etwa an, mit der erfindungsgemäßen Sensoreinheit Bewegungen mit einer Bewegungsgeschwindigkeit als solche Steuerbefehle zu erfassen, die beträchtlich schneller als menschliche Bewegungen sind, z.B. in Bereichen zwischen 10¹ bis 10⁵ Hz, und die etwa geeignet durch einen Lautsprecher od.dgl. erzeugt werden könnten. Insbesondere eine nach dem Impulsradarprinzip arbeitende Sensoreinheit sollte mit der Erfassung auch einer solchen, gegenüber einer menschlichen Bewegung schnellen Bewegung keine Erfassungsprobleme haben.

Wenn dann durch ein solches Bewegungssignal ein Programmier- bzw. Lernmodus aktiviert ist, könnten dann innerhalb eines vorbestimmten Zeitraumes weitere, Parameter einstellende Steuerbefehle dieser Art folgen.

Eine solche erfindungsgemäße Weiterbildung besitzt zwei Vorteile: Zum einen wäre es nicht notwendig, für Parametereinstellungen -- etwa Erfassungsabstand, Spüldauer, benutzungsunabhängiges Spülintervall -- direkt auf die Sensoreinheit zuzugreifen, wofür möglicherweise das Abnehmen des Urinals notwendig wäre, und zum anderen wird für diese Kommunikation mit der Einheit der ohnehin vorhandene Bewegungssensor selbst benutzt, so daß geringer zusätzlicher Hardware-Aufwand notwendig ist.

Weitere Vorteile, Merkmale und Einzelheiten der Erfindung ergeben sich aus der nachfolgenden Beschreibung von Ausführungsbeispielen anhand der Zeichnung. Diese zeigt in
- Fig. 1:: eine seitliche Schnittansicht der erfindungsgemäßen Steuereinrichtung für ein Urinal im eingebauten Zustand gemäß einer ersten, bevorzugten Ausführungsform und
- Fig. 2:: ein Blockschaltbild mit wesentlichen Komponenten der erfindungsgemäßen Steuereinrichtung.

Ein Urinalbecken 10 ist in bekannter Weise -- angedeutet durch eine Befestigungsschraube 12 -- hängend an einer Wand 14 befestigt.

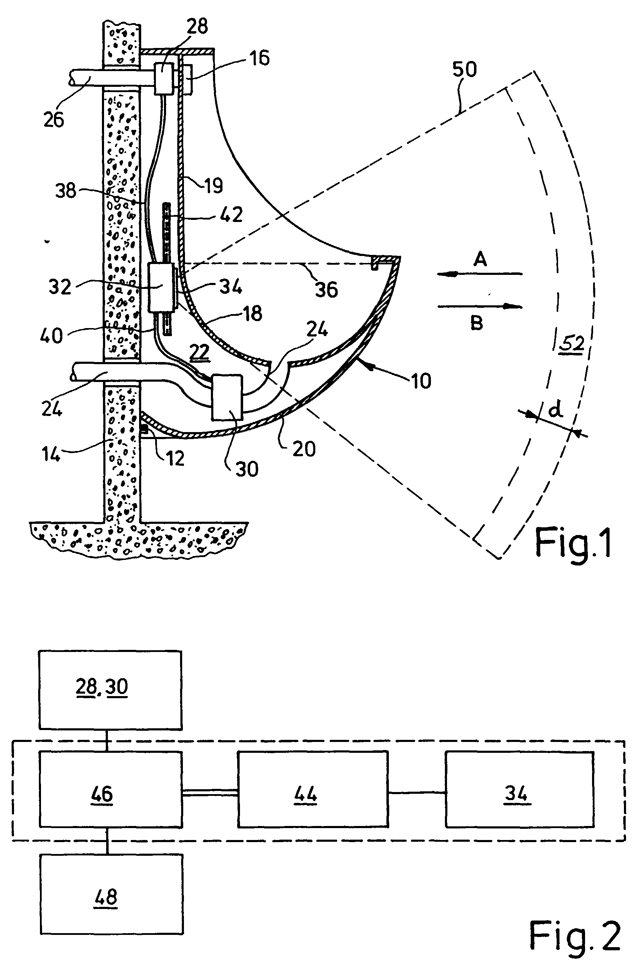

Wie aus der geschnittenen Seitenansicht gemäß Fig. 1 erkennbar, weist das i.w. aus Keramik oder Kunststoff bestehende Urinalbecken 10 eine über einen Wassereinlaß 16 mit Wasser füllbare Innenschale 18 sowie eine das Urinalbecken front- und bodenseitig begrenzende Außenschale 20 auf, wobei die Innenschale 18 und die Außenschale 20 einen -- zur Wand 14 offenen -- Hohlraum 22 begrenzen.

Während bodenseitig die Innenschale 18 mit einem sich rückwärtig durch die Wand 14 erstreckenden Wasserablauf bzw. Ablaufrohr 24 verbunden ist, wird der eine abwärts auf eine Rückwand 19 der Innenschale 18 gerichtete Düse bzw. Austrittsöffnung aufweisende Wassereinlaß 16 über einen Wasserzulauf 26 mit (Frisch-) Wasser versorgt.

Der Wasserzulauf 26 ist mit dem Wassereinlaß 16 über ein Spülventil 28 verbunden, das die Wasserzufuhr unterbricht und im dargestellten Ausführungsbeispiel elektromagnetisch betrieben ausgebildet ist, so daß mittels eines elektrischen Steuerimpulses die Wasserzufuhr ein- bzw. ausschaltbar ist. Besonders geeignet ist das Spülventil 28 vom sog. "bistabilen Typ", d.h. eine Stromaufnahme des Ventils findet nur während der Schalt- bzw. Umschaltvorgänge statt, und die stationären Betriebszustände "Durchlauf" bzw. "Sperren" sind jeweils stromlos.

Zusätzlich ist ein Abflußventil 30 im Verlauf des Ablaufrohres 24 vorgesehen, das ebenfalls mittels elektrischer Signale betätigbar ist und bei geeigneter Ansteuerung den Ablauf sperrt bzw. freigibt.

Eine Sensoreinheit 32 ist im Hohlraum 22 hinter der Rückwand 19 so befestigt, daß eine -- als Schlitz- bzw. Mikrostreifenleitungsantenne ausgebildete, flache und mit der Sensoreinheit 32 einen geschlossenen Körper bildende -- Antenneneinheit 34 der rückwärtigen (hohlraumseitigen) Seite der Rückwand 19 gegenübersteht und mit ihrem obersten Ende einen (mit dem Bezugszeichen 36 angedeuteten) maximalen Wasserstand in der Innenschale 18 festlegt.

Über ein Verbindungskabel 38 ist die Sensoreinheit mit dem elektromagnetischen Spülventil 28 verbunden, und über ein Verbindungskabel 40 wird eine elektrische Verbindung zwischen der Sensoreinheit 32 und dem Ablußventil 30 hergestellt.

Eine Verstellschiene 42 zeigt schematisch die Höhenverstellbarkeit der Sensoreinheit 32 (mit der daran vorgesehenen Antenneneinheit 34).

Elektrische Versorgungsleitungen für das Spülventil 28, das Abflußventil 30 bzw. die Sensoreinheit 32 sind im dargestellten Ausführungsbeispiel nicht gezeigt und sind -- je nach Anwendungsfall -- geeignet vorzusehen. Durch Auswahl von Elektromagnetventilen mit niedrigem Stromverbrauch ist die Steuereinrichtung gemäß dem dargestellten Ausführungsbeispiel allerdings auch durch -- in den jeweiligen Einheiten ggf. enthaltene -- Batterien betreibbar, oder eine im Wasserzulauf sitzende (nicht gezeigte) Turbine könnte hindurchfließendes Wasser zur Stromerzeugung und -versorgung der Sensoreinrichtung und der Ventile nutzen.

Das Blockschaltbild gemäß Fig. 2 zeigt die wesentlichen (funktionalen) Komponenten der erfindungsgemäßen Steuereinrichtung, wobei die gestrichelte Linie die in der Sensoreinheit 32 bzw. der Antenneneinheit 34 realisierten Funktionen umschließt.

Die Antenne 34 ist mit einer Hochfrequenzeinheit 44 verbunden, die zum Erzeugen durch die Antenne 34 abgestrahlter Sendesignale bzw. zum Verarbeiten durch die Antenne 34 empfangener Reflektions- bzw. Empfangssignale eingerichtet ist. Die Hochfrequenzeinheit 44 im dargestellten Ausführungsbeispiel erzeugt auf der Basis der Empfangssignale ein zwei-kanaliges Bewegungsrichtungssignal, wobei der Signalverlauf eines ersten Kanals einer Bewegung eines Objektes in Richtung auf die Sensoreinheit 32 bzw. die Antenneneinheit 34 hin entspricht (in Richtung des Pfeiles A in Fig. 1), und das Signal auf dem zweiten Kanal eine entgegengesetzte Bewegungsrichtung (entlang des Pfeiles B) repräsentiert.

Das zwei-kanalige Bewegungssignal wird von einer Auswert- und Steuereinheit 46 empfangen und in geeignete Steuersignale für das Spülventil 28 bzw. das Abflußventil 30 umgesetzt, und zusätzlich wird durch die Auswert- und Steuereinheit 46 ein -- externer und in der Fig. 1 nicht näher gezeigter -- Signal- bzw. Alarmgeber 48 angesteuert.

Die Sensoreinheit 32 im dargestellten Ausführungsbeispiel erzeugt Hochfrequenz- bzw. Mikrowellensignale einer Frequenz höher etwa 1 GHz, und bevorzugt in den Bereichen zwischen etwa 2,4 und 2,48 GHz sowie zwischen etwa 5,7 und 5,9 GHz. In diesen Frequenzbereichen verfügen die hochfrequenten Wellen über besonders günstige Eigenschaften im Hinblick auf eine Durchdringung der Keramikwände des erfindungsgemäßen Urinals; zusätzlich ist in diesen Frequenzbereichen mit niedrigen Hochfrequenz-Sendeleistungen eine befriedigende Sensorreichweite erzielbar.

Während der Mikrowellensensor nach dem beschriebenen Ausführungsbeispiel gemäß Fig. 1 bzw. Fig. 2 nach dem Doppler-Prinzip arbeitet, d.h. eine Bewegung eines Körpers im Erfassungsbereich des Sensors eine Frequenzverschiebung zwischen dem ausgestrahlten Signal und dem reflektierten Empfangssignal herbeiführt und diese Frequenzverschiebung zur Bewegungs- bzw. Geschwindigkeitserkennung ausgewertet wird, ist alternativ auch problemlos ein auf Impulsbasis arbeitender (Breitband-) Radarsensor einsetzbar, welcher mittels eines vorgegebenen (einem Erkennungsabstand entsprechenden) Zeittores eine Vielzahl von reflektierenden Impulsen erfaßt und aus deren Empfangshäufigkeit (Integration) auf eine Bewegung eines Objektes rückschließt. Dabei liegt die Summe aus Hinlauf- und Rücklaufzeit eines im Erkennungsabstand stehenden Objekts innerhalb des Zeittores und definiert insoweit den Abstand. Auf diese Weise ist nicht nur eine exakte Reichweiteneinstellung (durch Wahl des Zeittores) möglich, sondern auch eine mögliche gegenseitige Beeinflussung von Sensoren benachbarter Urinale wird durch dieses Prinzip praktisch ausgeschaltet: Durch ein sehr kleines Verhältnis von Impulsdauer zu Impulsperiode ist die Wahrscheinlichkeit des (Tor-gesteuerten) Empfangs durch einen benachbarten Sensor minimal.

Das zweikanalige bewegungsrichtungsabhängige Ausgangssignal der Hochfrequenzeinheit 44 wird beim Doppler-Bewegungssensor 32 gemäß der dargestellten Ausführungsform mittels einer Hilfsphase sowie einer zugehörigen zweiten Demodulations-Mischstufe erzeugt, so daß für eine störsichere und korrekte Ablaufsteuerung optimale Eingangsinformationen zur Verfügung stehen (zwar wäre -- durch entsprechend aufwendigere Signalauswertung -- eine Urinalsteuerung auch mit lediglich einem einkanaligen (d.h. nichtbewegungsrichtungsabhängigen) Sensorsignal möglich, hierdurch wächst jedoch zusätzlich die Gefahr von Fehlfunktionen bei untypischen Benutzungsvorgängen).

Die Signalverarbeitung findet dann in der Auswert- und Steuereinheit 46 entsprechend vorgegebener Abläufe bzw. Muster auf der Basis der Bewegungsinformation durch die Hochfrequenzeinheit 44 statt, wobei typische Ablaufparameter --etwa Dauer einer Betätigung des Spülventils 28 zum Spülen; Spülbeginn, nachdem ein Benutzer sich entfernt hat usw. --geeignet in einer Speichereinrichtung innerhalb der Auswert- und Steuereinheit 46 vorbestimmt und gespeichert sind und ggf. durch Einstellung und/oder Programmierung veränderbar sind.

Gemäß einer alternativen Ausführungsform kann ein auf Impulsbasis arbeitender Breitband-Radarsensor auch eine Mehrzahl von diskret erfaß- und auswertbaren Entfernungszonen aufweisen, wobei in diesem Fall eine Auswertung der verschiedenen Zonensignale und deren zeitliche Abfolge eine konkrete Bewegungsrichtung eines Benutzers -- entsprechend dem beim Ausführungsbeispiel gemäß Fig. 1 und Fig. 2 gezeigten, bewegungsrichtungsabhängigen Zweikanaldoppler --ermöglicht.

Gemäß dem dargestellten Ausführungsbeispiel wird als Antenne 34 eine Anordnung eingesetzt, die in sich flach ist und die Montage zusammen mit der (übrigen) Sensoreinheit 32 in einem flachen Gehäuse gestattet, das problemlos hinter der Rückwand eines Urinalbeckens im Hohlraum befestigbar ist und sich -- zu Nachrüstungszwecken -- auch für derzeit handelsübliche, gängige Urinalbecken eignet. Vorteilhaft macht eine solche Befestigung das Vorsehen von Durchbrüchen, Bohrungen od.dgl. in der Wand überflüssig, so daß eine Nachrüstung zerstörungsfrei und schnell -- auch durch ungeübtes Personal -- erfolgen kann.

Idealerweise wird die Antenneneinheit 34 mit auf einer Platine durch Ätzen od.dgl. gebildete Mikrostreifenleitungen bzw. Schlitze realisiert, die neben einer für den Anwendungszweck günstigen Richtcharakteristik auch eine einfache, großserientaugliche Fertigung ermöglichen.

Wie in der Fig. 1 mittels der durch die gestrichelte Linie 50 angedeuteten Antennencharakteristik gezeigt, beschreibt diese eine Strahlungskeule einer 3dB-Breite von etwa 90° in der Vertikalen und etwa 70° in der Horizontalen. Durch die günstigen Durchdringungseigenschaften der benutzten Mikrowellen findet durch die keramische Innen- bzw. Außenschale 18, 20 praktisch keine relevante Dämpfung des Sensorsignals statt, solange im Urinalbecken keine dickere Wasserschicht steht. Durch geeignete Antennendimensionierung bzw. Ausgangsleistung des Sendeteils (in der Hochfrequenzeinheit 44) ist die maximale Reichweite der Sensoreinheit auf einen Erfassungsbereich von ca. 1 Meter eingestellt, so daß eine Bewegung innerhalb dieses Bereiches ein Sensorsignal erzeugt.

Durch geeignete Maßnahmen (Leistungserhöhung des Senders, Eingangsempfindlichkeit des Empfängers, Veränderung der Richtcharakteristik der Antennen, Reflektoren, Dämpfungswände o.ä.) ist -- je nach Bedarf -- der Erfassungsbereich im Hinblick auf Entfernung und Erfassungswinkel einstellbar. Beispielsweise im Hinblick auf eine möglichst beeinflussungsfreie Steuerung einer Reihe von nebeneinander angeordneten, jeweils mit dem erfindungsgemäßen Steuerungssystem versehener Urinale bietet es sich allerdings an, einen seitlichen Erfassungsbereich auf beeinflussungsfreie Abstände zu beschränken.

Einfacher gestaltet sich die Einstellung des Erfassungsbereiches bei Verwendung des auf Impulsbasis arbeitenden Radarsensors: Dort entspricht der Erfassungsbereich der Signallaufzeit zwischen Abstrahlung vom Sendeteil und Empfang des reflektierten Impulses am Objekt der Dauer einer Tot- bzw. Verzögerungszeit, die mit dem Aussenden des Impulses gestartet wird, und nach deren Ende der reflektierte Impuls erfaßt wird. Als Ergebnis entstehen -- bei angenommener kugelförmiger Ausbreitung im Raum -- schalenförmige und in ihrem Abstand vom Sensor klar definierte Erfassungsbereiche, die in Fig. 1 symbolisch mit dem Bezugszeichen 52 bezeichnet sind und -- impulsbreitenbedingt -- eine Schalendicke d aufweisen. Auch ist es möglich, durch den Einsatz einer Richtantenne den Erfassungsbereich zu beeinflussen.

Durch eine verglichen mit der Impulsdauer (im einstelligen ns-Bereich) vergleichsweise niedrige Impuls-Wiederholungsfrequenz (z.B. 1 bis 3 MHz) fallen zudem die Zeittore benachbarter Impuls-Radarsensoren auseinander, so daß eine gegenseitige Beeinflussung selbst bei Anordnung eines Radarsensors im Erfassungsbereich eines zweiten vorteilhaft nicht erfolgt.

Gemäß einer Weiterbildung der Impuls-Radartechnologie ist es zudem möglich, durch Erzeugen eines zweiten oder weiterer (unterschiedlicher) Zeittore für denselben Sendeimpuls eine Mehrzahl von räumlichen Erfassungsbereichen vorzugeben, welche dann jeweils bei Durchschreiten der zu erfassenden Person ein auswertbares Signal herbeiführen könnten. Auf diese Weise wäre dann für eine Impulsradar-Sensorerfassung auch eine Bewegungsrichtungserkennung realisierbar, die bei einem Dopplerradar z.B. durch Quadraturdemodulation erreichbar ist.

Die in der Fig. 1 dargestellte Anordnung der Sensoreinheit 32 unterhalb der maximalen Füllstandslinie 36 erlaubt zusätzlich auf besonders vorteilhafte Weise die Ausnutzung einer wesentlichen Eigenschaft der zur Bewegungserkennung eingesetzten Mikrowellen: Während das von der Antenne 32 abgestrahlte Hochfrequenzsignal annähernd verlustlos das Keramik- (alternativ: Plastik-) material der Innenschale 18 durchdringt, findet aufgrund der hohen Dielektrizitätskonstante (ε = 83) von Wasser eine starke Beugung der Mikrowellen beim Durchgang durch eine Wasserschicht statt (der Absorptionskoeffizient im Bereich der zur Verfügung stehenden Frequenzen bewegt sich von etwa 0,1/cm bis etwa 20/cm). Dies hat zur Folge, daß bei einem Wasserstand an der obersten Füllhöhe 36 die von der Sensoreinheit 32 bzw. der Antenne 34 ausgesendeten Mikrowellen so stark gedämpft werden, daß eine signifikante (und erfaß- bzw. auswertbare) Reflektion an einem sich vor dem Urinal bewegenden Körper nicht mehr stattfindet.

Dieser Effekt wird nun erfindungsgemäß von der vorliegenden Steuereinrichtung so ausgenutzt, daß das Erfassen eines Füllstandes bis zur Linie 36 eine Wasserzufuhr durch den Wassereinlaß 16 mittels des Spülventils 28 vollständig blockiert; es wird also ausgeschlossen, daß bei einem --durch entsprechende Höhenpositionierung der Sensoreinheit 32 vorwählbaren -- maximalen Wasserstand 36 noch zusätzlich Spülwasser eingelassen wird, so daß ein (auch mißbräuchliches) Überlaufen des Urinals zuverlässig verhindert werden kann.

Vielmehr sorgt ein solcher durch den Sensor 32 erkannter Betriebszustand für ein geöffnetes Abflußventil 30, das --falls keine Verstopfung vorliegt -- das Entleeren der Innenschale 18 ermöglicht.

Wie Versuchsmessungen ergeben haben, kann durch geeignete Positionierung des Sensors unterhalb einer maximalen Wasserlinie sowie entsprechende Auswertung des Füllsignals zuverlässig verhindert werden, daß bei gefülltem Becken zusätzliches Spülwasser fließt; anderseits wird bei wieder gesunkenem Wasserstand sofort die volle Funktionsfähigkeit des Sensors (d.h. Reaktion auf die Bewegung einer Person) herbeigeführt.

Messungen haben ferner ergeben, daß eine aktive Benutzung des Urinals durch eine Person -- also Erzeugen eines Flüssigkeitsfilms entlang der Rückwand 19 bzw. dem Bereich der Innenschale vor der Sensoreinheit 32 -- aufgrund der besonderen Reflektionseigenschaften dieses Films zu einem charakteristischen Sensorsignal führt. Gemäß einer bevorzugten Weiterbildung der Erfindung kann daher die erfindungsgemäße Steuereinheit so weitergebildet werden, daß durch Erfassung bzw. Auswertung dieses Benutzungssignals auf die Urinmenge und entsprechend auf eine zum Spülen erforderliche Wassermenge rückgeschlossen werden kann. Diese Wassermenge wird dann beispielsweise durch Steuern der Öffnungszeit des Spülventils 28 eingestellt.

Eine ordnungsgemäße Funktion der erfindungsgemäßen Urinalsteuerung ist auch ohne gesondertes Abflußventil 30 möglich; in einem solchen Fall würde sich das Urinal stets selbst entleeren.

Ein wesentlich erfindungsgemäßer Lösungsgedanke -- das gleichzeitige Nutzen eines Radarsensors zur (versteckten, d.h. vor Beschädigung geschützten) Bewegungs- und Anwesenheitserkennung sowie zur Füllstandserkennung (bzw. als Überlaufschutz) -- ist in entsprechender Weise auf andere sanitäre Einrichtungen, beispielsweise Waschbecken, Badewannen oder Toiletten übertragbar. Durch den kompakten --und bevorzugt feuchtigkeitsdicht eingegossenen -- Zustand der Sensor- und Antenneneinheit 32, 34 erscheint zudem der unmittelbare Einsatz der dargestellten Einheit in den angeführten weiteren sanitären Einrichtungen problemlos denkbar; lediglich die Steuervorgänge bzw. die zu steuernden Organe bzw. Ventile müßten dann in entsprechender Weise angepaßt bzw. geändert werden.

Auch ist die vorliegende Erfindung nicht auf die im dargestellten Beispiel beschriebenen Schlitz- oder Streifenleitungsantennen beschränkt; vielmehr ist problemlos der Einsatz beliebiger Antennenstrukturen -- auch einfacher Drahtantennen, beispielsweise entlang des Beckenrandes -- möglich, wobei die Antenne entsprechend der gewünschten Richtcharakteristik bzw. des vorgesehenen Erfassungsbereiches auszuwählen und anzupassen ist.

Im Gebrauch tritt ein Benutzer an das Urinalbecken 10 heran (Bewegungsrichtung gemäß Pfeil A in Fig. 1) und gerät in den Erfassungsbereich der Sensoreinheit 32. Die Gegenwart des Benutzers wird durch Auswertung eines entsprechenden Bewegungssignals auf dem ersten Kanal der Hochfrequenzeinheit erfaßt.

Durch Erfassen des reflektierten Sensorsignals als Reaktion auf eine Benetzung der Rückwand 19 mit Flüssigkeit wird bevorzugt zusätzlich Dauer und Umfang der Benutzung des Urinals erfaßt.

Der Benutzer entfernt sich dann in Richtung des Pfeils B von dem Urinalbecken, dieser Vorgang wird durch Auswerten eines entsprechenden Bewegungssignals auf dem zweiten Kanal der Hochfrequenzeinheit erfaßt, und eine vorbestimmte Zeit nach dem Entfernen betätigt die Auswert- und Steuereinheit 46 das Spülventil 28 zum Spülen des Urinals. Bevorzugt wird dabei die Spülmenge (bzw. die Spüldauer des Spülventils 28) in Abhängigkeit von einer festgestellten, durch den Benutzer abgegebenen Urinmenge gesteuert.

Für den Fall einer Verstopfung des Wasserablaufes 24 und einem entsprechenden Ansteigen des Flüssigkeitspegels in der Innenschale 18 erkennt der Sensor aufgrund der empfangenen Reflektionswerte, daß der Flüssigkeitsstand die maximale Füllhöhe 36 erreicht hat und deaktiviert daraufhin das Spülventil 28. Ein weiteres Eintreten von Spülwasser in die Innenschale 18 des Urinalbeckens 10 ist dann so lange nicht möglich, bis der Flüssigkeitspegel wieder abgesunken ist und die Sensoreinheit 32 zur Bewegungserkennung wieder freiliegt.

Gemäß vorteilhafter Weiterbildungen der vorstehend beschriebenen Erfindung, die in beliebiger Weise und auch über konkret beschriebene Merkmalskominationen hinaus als offenbart gelten soll, bietet es sich zum einen an, den Sensor mit einem externen Funksende- und/oder Empfangsmodul zur Fernsteuerung bzw. als Alarmgeber zu versehen. Auf diese Weise wird dann etwa eine drahtlose Parametereinstellung erfolgen können, oder aber es könnte über Betriebsstörungen ein externer Alarm ausgelöst werden.

Gemäß einer weiteren Weiterbildung der Erfindung ist es zudem möglich, den Bewegungssensor selbst als Signalempfänger für ein Lern- und/oder Programmiersteuersignal zu verwenden; hierfür ist es lediglich erforderlich, daß dieses Steuersignal sich von einem (als Nutzsignal zu interpretierenden) menschlichen Bewegungssignal unterscheidet, also z.B. wesentlich schneller sein kann. Ein solches detektiertes schnelles Steuersignal würde dann den Sensor in einen Programmiermodus versetzen, und weitere, derartige Signale könnten dann -- ohne Zugriff auf die Sensoreinheit selbst bzw. ohne die Notwendigkeit einer Demontage -- beliebige Einstellungen des Sensors zulassen.

## Patentansprüche

1. Steuervorrichtung für ein Urinal oder dergleichen Einrichtung,
mit einem zum Aktivieren eines Spülwasserzulaufs in ein Urinalbecken (10) elektrisch steuerbaren Ventil (28)
und einer mit dem Ventil (28) verbundenen Sensoreinheit (32) zum berührungslosen Steuern des Ventils (28) als Reaktion auf eine Bewegung eines Benutzers frontseitig und relativ zu dem Urinalbecken (10),
dadurch gekennzeichnet,
daß die Sensoreinheit (32) zum Erfassen einer Bewegung auf der Basis von eine Schale (18) des Urinalbeckens (10) durchdringenden Mikrowellensignalen ausgebildet ist und
so an einem rückwärtigen Bereich des Urinalbeckens (10) vorgesehen ist, daß ein Erfassungsbereich der Sensoreinheit (32) durch die Schale (18) des Urinalbeckens (10) hindurch auf den Benutzer gerichtet ist.

2. Vorrichtung nach Anspruch 1, dadurch gekennzeichnet, daß die Sensoreinheit (32) so hinter der Schale (18) angeordnet ist, daß ein maximaler Flüssigkeits-Füllpegel (36) in der Schale (18) einer vertikalen Montageposition der Sensoreinheit (32) entspricht und die Sensoreinheit (32) eine Erfassungseinrichtung (46) aufweist, die zum Erfassen eines Füllzustands in der Schale (18) auf der Höhe des maximalen Füllpegels (36) und zum Deaktivieren des Ventils (28) als Reaktion darauf ausgebildet ist.

3. Vorrichtung nach Anspruch 1 oder 2, dadurch gekennzeichnet, daß die Sensoreinheit als torgesteuerter, nach dem Impulsprinzip arbeitender Radarsensor (32) ausgebildet ist, der als Reaktion auf die Bewegung des Benutzers ein Bewegungssignal erzeugt.

4. Vorrichtung nach Anspruch 3, dadurch gekennzeichnet, daß der Radarsensor (32) Sendesignale im Bereich zwischen etwa 1,8 und etwa 2,8 GHz oder zwischen etwa 5,0 und etwa 7,0 GHz erzeugt.

5. Vorrichtung nach einem der Ansprüche 1 bis 4, dadurch gekennzeichnet, daß die Sensoreinheit eine Einrichtung zum Vorbestimmen und Ändern des Erfassungsbereiches aufweist.

6. Vorrichtung nach einem der Ansprüche 1 bis 5, dadurch gekennzeichnet, daß die Sensoreinheit (32) eine Antenne (34) aufweist, die als Schlitzantenne, Mikrostreifenleitungsantenne oder als sonstige, mit auf einem flachen Substrat gebildeten Strahlern aufgebaute Antenne realisiert ist.

7. Vorrichtung nach Anspruch 6, dadurch gekennzeichnet, daß die Antenne eine Richtcharakteristik mit einem horizontalen Öffnungswinkel von etwa 70° und einem vertikalen Öffnungswinkel von etwa 90°, jeweils bezogen auf einen 3dB-Abfall, aufweist.

8. Vorrichtung nach einem der Ansprüche 1 bis 7, dadurch gekennzeichnet, daß die Sensoreinheit (32) in einem flachen, für eine Montage hinter handelsüblichen Urinalbecken bemessenen Gehäuse aufgenommen ist, das zum Schutz von Feuchtigkeit und Verschmutzung vergossen ist.

9. Vorrichtung nach einem der Ansprüche 1 bis 8, gekennzeichnet durch ein zusätzliches Funkmodul zum drahtlosen Übertragen von Betriebszustandsinformationen zu einer externen Auswerteinheit.

10. Vorrichtung nach einem der Ansprüche 1 bis 9, gekennzeichnet durch eine mit der Sensoreinheit (32) verbundene Decodiereinheit, die zum Erfassen eines von der Bewegung einer Person unterscheidbaren mechanischen Bewegungssignals aus einem Sensorsignal der Sensoreinheit ausgebildet ist, und eine mit der Decodiereinheit zusammenwirkenden Zustandssteuereinrichtung zum Einstellen oder Bestimmen von Betriebsparametern der Steuervorrichtung als Reaktion auf das mechanische Bewegungssignal.

11. Vorrichtung nach Anspruch 10, gekennzeichnet durch einen bevorzugt netzunabhängigen, portablen elektromagnetischen Energiewandler, der zum Erzeugen des mechanischen Bewegungssignals als Reaktion auf eine elektrische Ansteuerung ausgebildet ist.
